# NEUE EUROPÄISCHE PATENTSCHRIFT

(11) **EP 3 296 258 B2**
(45) Veröffentlichungstag und Bekanntmachung des Hinweises auf die Entscheidung über den Einspruch: **06.05.2026**
(45) Hinweis auf die Patenterteilung: 02.12.2020
(21) Anmeldenummer: 17198604.5
(22) Anmeldetag: 20.05.2014
(51) Int. Cl.: C01B 25/32, C01B 25/36, C01F 11/36, C01F 11/46, C05B 11/06, C01F 11/38

(54) **VERFAHREN ZUR BEHANDLUNG VON PHOSPHATHALTIGEN ASCHEN AUS ABFALLVERBRENNUNGSANLAGEN DURCH NASSCHEMISCHEN AUFSCHLUSS ZUR GEWINNUNG VON ALUMINIUM-, KALZIUM-, PHOSPHOR- UND STICKSTOFFVERBINDUNGEN**
METHOD FOR THE TREATMENT OF ASHES CONTAINING PHOSPHATE FROM WASTE INCINERATION PLANTS THROUGH WET-CHEMICAL DECOMPOSITION FOR THE RECOVERY OF ALUMINIUM, CALCIUM, PHOSPHORUS AND NITROGEN COMPOUNDS
PROCÉDÉ DE TRAITEMENT DES CENDRES CONTENANT DES PHOSPHATES PROVENANT DE L'INCINÉRATION DES DÉCHETS PAR DÉCOMPOSITION CHIMIQUE PAR VOIE HUMIDE PERMETTANT L'OBTENTION DES COMPOSÉS DE L'ALUMINIUM, DU CALCIUM, DU PHOSPHORE ET DE L'AZOTE

(30) Priorität: 06.11.2013 DE 102013018650
(43) Veröffentlichungstag der Anmeldung: 21.03.2018
(62) Teilanmeldung aus: 14726081.4
(73) Patentinhaber: Remondis Aqua GmbH & Co. KG, 44536 Lünen (DE)
(72) Erfinder: LEHMKUHL, Josef, 45721 Haltern am See (DE); LEBEK, Martin, 31303 Burgdorf (DE)
(74) Vertreter: Peters, Hajo

(56) Entgegenhaltungen:
- EP-A1- 2 602 013
- EP-A2- 0 488 736
- WO-A1-2011/067321
- WO-A1-2011/137880
- WO-A1-2018/046621
- DE-B3- 102012 015 065
- JP-B2- 4 972 584
- US-A- 4 029 743
- US-A- 4 393 032
- US-A- 418 259
- Gorazda et al., “From sewage sludge ash to calcium phosphate fertilizers,” Journal of Chemical Technology, Band 14, Nr. 3, 2012, 54-58, 10.2478/vl 0026-012-0084-3
- Gorazda et al. “Wastes. Alternative raw materials for phosphorus industry” Przemysl Chemiczny, 92/5, 761-766, Januar2013
- Krupa et al., “Manufacturing of phosphoric acid from hydroxyapatite, contained in the ashes of the incinerated meat- bone wastes,” Polish Journal of Chemical Technology, 10, 3, 13 — 20P,o I2.0 JO. 8C, h1e0m.2.4 7T8ec/vh1.0, 0V2o6l.- 01008,- 0N0o3.0 3-6, 2008
- Petzet et al. “On wet chemical phosphorus recovery from sewage sludge ash by acidic or alkaline leaching and an optimized combination of both,’’water research 46 (2012) 3769-3780
- Technical report of the Phos4You partnership on processes to recover phosphorus from wastewater, September 2021
- 5th European Conference on Sludge Management, ECSM 2019
- Hamburg Wasser, "Ressourcen fur die Zukunft PHOSPHORRUCKGEWINNUNG" https://www.hamburgwasser.de/privatkunden/unser-wasser/d er- weg-des-wassers/abwasserreinigung/klaerwerk-hamburg/ phosphorrueckgewinnung
- Phosphor Recycling Hamburg, www.phosphorrecycling-hh.de
- Slack ; „ Phosphoric acid" 1968
- Kowalski et al., „ Thermal utilisation of sewage sludge in Poland”, 2003

## Beschreibung

Die Erfindung betrifft ein Verfahren zur Behandlung von phosphathaltigen Abfällen, insbesondere phosphathaltigen Aschen aus Abfall-Verbrennungsanlagen, durch nasschemischen Aufschluss zur Gewinnung von Aluminium-, Kalzium-, Phosphor- und Stickstoffverbindungen, mindestens umfassend die Gewinnung (Erzeugung) von Kalziumsulfat (Ca(SO₄) und insbesondere zur optionalen Herstellung von Phosphorsäure (H₃PO₄).

Zur Herstellung von Düngemittel werden Rohphosphate benötigt. Um die endlichen Rohphosphate ersetzen zu können, ist allgemein bekannt, dass die Rückgewinnung von Phosphor bzw. Phosphaten aus Abfällen und Abwässern in den europäischen Industrieländern angestrebt wird (Siehe Patent DE 10 2012 015 065 B3). Dies ist auch deswegen angezeigt, weil die Rohphosphate zunehmend mit Schwermetallen wie Cadmium und Uran verunreinigt sind und sich diese Verunreinigung in den Düngemitteln und im Grundwasser wiederfinden.

Eine wesentliche Phosphat-Ressource in Europa ist das Abwasser aus kommunalen und industriellen Kläranlagen. Allein etwa 50.000 Mg (t) Phosphor gelangen pro Jahr in Deutschland ins Abwasser und werden zum allergrößten Teil mit Hilfe von Fällungsmitteln wie Eisen- oder Aluminiumsalzen als Metallsalze ausgefällt und mit dem Klärschlamm abgeschieden. Die phosphathaltigen Klärschlämme werden heute zumeist verbrannt und die dabei entstehende Asche deponiert oder anderweitig "veruntreut" (z.B. Straßenbau, Bergeversatz), denn der darin enthaltene Phosphor wird - bis auf wenige Ausnahmen in Versuchsanlagen - nicht zurückgewonnen EP 2 602 013 offenbart ein Verfahren zur Rückgewinnung von Phosphorverbindungen aus Klärschlammaschen.

Ähnlich wie bei anderen industriellen Recycling-Prozessen wie beispielsweise der Rückgewinnung von Eisen aus Schrott, der Rückgewinnung von Papier aus Altpapier, der Rückgewinnung von Kupfer und anderen Metallen aus Elektrogeräten, ist auch eine industrielle Rückgewinnung von Phosphor aus Abfällen möglich. Eine wesentliche Voraussetzung dazu ist, dass die phosphorhaltigen Rückstände eine ausreichend hohe Phosphorkonzentration und eine geringe Verunreinigung aufweisen und im Wesentlichen den z.Zt. verwendeten Rohphosphaten entsprechen, möglichst ohne schädliche Uran- und Cadmium-Verunreinigungen.

Phosphate werden aus Rohphosphat (Rock, mit einem Phosphoranteil von ca. 30% P₂O₅) durch **Säure-Aufschluss** mit vorzugsweise Schwefelsäure gewonnen, wobei Phosphorsäure und / oder Kalziumphosphat-Dünger entsteht (so genanntes "Superphosphat"). Die Aschen von verbrannten Klärschlämmen oder tierischen Abfällen wie Tiermehl, enthalten bis zu 35 Gew.% P₂O₅, allerdings, je nach Fällungsmittel, auch bis zu 25 Gew.% Eisen-, Aluminium- oder Kalziumoxid. Dieser hohe Metalloxidgehalt, der bis zu zehnfach höher sein kann als im Rohphosphat, schränkt die Verwendung von Klärschlammaschen als alternatives Rohphosphat in industriellen Prozessen erheblich ein. Eine Problemlösung wird mit dem Patent DE 10 2012 015 065 B3 aufgezeigt, wobei bei der Abwasserreinigung Phosphate durch Aluminiumsalze gebunden und anschließend zu Kalziumphosphat umgewandelt werden, damit bei anschließender Verbrennung des Klärschlammes die zurückbleibende Asche vorzugsweise Kalziumphosphat enthält, und möglichst wenig Aluminium- und Eisen-Verbindungen. Die Kalziumphosphatreiche Asche ist geeignet, als Rohphosphat zur Herstellung von Düngemitteln eingesetzt zu werden, allerdings immer in Kombination mit begleitenden Verunreinigungen aus der Asche.

Aschen, die aus der Verbrennung von Klärschlämmen, Bioabfällen, biologisch abbaubaren Abfällen, tierischen Abfällen etc. wie Tiermehl entstehen, enthalten verschiedene Wertstoffe. Die folgende Tabelle zeigt die Hauptbestandteile (als Oxide gerechnet) und den Wertstoffgehalt von einigen Aschen, die bei der Verbrennung von Klärschlamm entstehen:

| | Asche A | Asche B | Asche C |
|---|---|---|---|
| % Fe₂O₃ | 21,9 | 3,1 | 11,9 |
| % Al₂O₃ | 9,3 | 21,5 | 12,4 |
| % CaO | 15,2 | 14,5 | 11,4 |
| % P₂O₅ | 21,0 | 23,0 | 20,5 |
| % SiO₂ | 18,2 | 27,0 | 23,0 |

Die besondere Wertigkeit von Aschen ist in ihrem Gehalt an P₂O₅, CaO und Al₂O₃ begründet.

Momentan ist es nicht möglich die verschiedenen Wertstoffe in solchen Aschen effizient und kostengünstig als vermarktungsfähige Produkte zurückzugewinnen. Die hier beschriebene Erfindung beschreibt ein **optional** mehrstufiges Verfahren, mit dem aus Aschen höherwertige Phosphate wie oder Phosphorsäure sowie Kalziumsulfat (Gips) und evtl. auch Aluminiumhydroxophosphat gewonnen werden können.

Das erfindungsmäße Verfahren beruht darauf, die Wertstoffe aus der Asche durch fraktioniertes Lösen in Mineralsäuren und durch Zugabe geeigneter Reaktanten in unterschiedliche Produkte umzuwandeln, insbesondere in Produkte aus der Gruppe Kalziumphosphat (Ca₃(PO₄)₂), Kalziumsulfat (CaSO₄), und Aluminiumhydroxophosphat (Al(OH)₃ x AlPO₄), das Verfahren mindestens umfassend die Gewinnung von Kalziumsulfat (CaSO4) und ist insbesondere zur optionalen Herstellung von Phosphorsäure (H₃PO₄) geeignet.

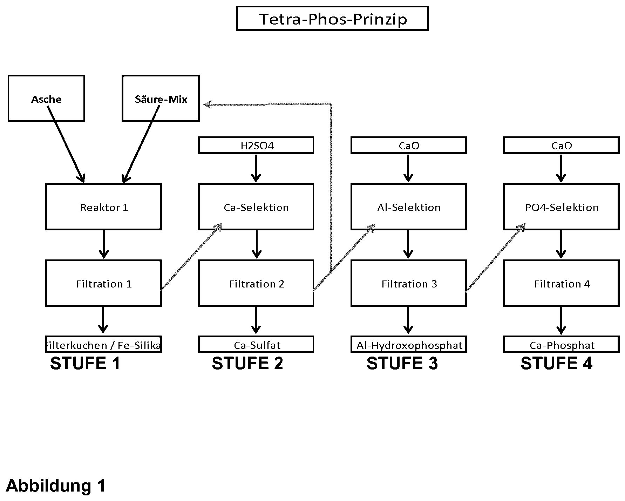

Eine Erläuterung des Verfahrens ist in Abbildung 1 schematisch wiedergegeben.

Bei Lösen der Wertstoffe aus phosphathaltigen Aschen in Stufe 1 wird ausdrücklich keine Salzsäure oder eine andere Halogenwasserstoffsäure verwendet, wie es heute teilweise Stand der Technik ist.

Wenn Aschen mit **Salzsäure** behandelt werden, lösen sich Eisen- Aluminium und Kalziumsalze, vorzugsweise deren Phosphate. Aus der gemeinsamen Aufschlusslösung können zwar unterschiedliche Fraktionen an Aluminiumverbindungen und oder Kalziumphosphat gewonnen werden, der Nachteil ist jedoch die Chlorid-Komponente, die, weil alle infrage kommenden Chloride leicht löslich sind, letztlich als Abwasser den Prozess verlassen oder nur sehr aufwändig, z.B. durch Eindampfung, zurückgewonnen werden können.

Dieser gravierende Nachteil wird durch die Erfindung in einem (optional) mehrstufigen Verfahren eindrucksvoll gelöst, in dem in der **ersten** Stufe zur Behandlung der Asche (dem Löseprozess in Säure) nicht verdünnte Salzsäure, sondern verdünnte Phosphorsäure verwendet wird. Die Salze dieser Säuren, wie Kalziumphosphat, sind im Vergleich zu beispielsweise Natrium- oder Kalziumchlorid, erheblich höherwertiger, so dass durch Fäll- und Eindampfprozesse die Salze, vor allem Kalziumphosphat , gewonnen werden können und durch deren Vermarktung - vor allem als Düngemittel der gesamte Recyclingprozess wirtschaftlich wird.

Die **erste Stufe** ist in einer allgemeinen Ausführungsform im Wesentlichen auch mit folgenden Gleichungen zu beschreiben:

Ca₃(PO₄)₂ + 6HNO₃ = 3Ca(NO₃)₂ + 2H₃PO₄

AlPO₄ + 3HNO₃ = Al(NO₃)₃ + H₃PO₄

Aus den Feststoffen, z.B. der Asche, lösen sich vor allem Ca- und Al-Ionen, während Fe-Ionen nur in geringen Mengen in Lösung gehen und mit den ebenfalls kaum löslichen Silikaten (SiO2) im Rückstand verbleiben. Die unlöslichen Bestandteile werden nach dem Stand der Technik durch Filtration von der sauren Aufschlusslösung abgetrennt, z.B. mit einem Dekanter, einem Vakuumbandfilter oder einer Filterpresse. Bevorzugt wird, um die Verluste zu reduzieren, der Rückstand in den Filteraggregaten mit Wasser gewaschen und das Waschwasser als Verdünnungswasser für die Aufschlusssäure in die erste Prozessstufe zurückgeführt.

Im Anschluss an Stufe 1 kann durch Zugabe von Schwefelsäure (H₂SO₄) zum resultierenden Filtrat oder Überstand nach Stufe 1 nun Kalziumsulfat (CaSO₄; Gips) präzipitiert werden. Dies erfolgt in der sauren, filtrierten Aufschlusslösung in der **zweiten Stufe** nach insbesondere der zweiten untenstehenden chemischen Gleichung

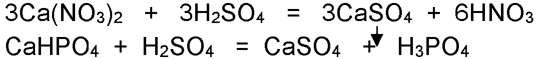

Um den Bedarf an Salpetersäure zu reduzieren und den Prozess wirtschaftlicher zu gestalten, ist ein wichtiger Schritt des mehrstufigen Verfahrens die Rückgewinnung von Salpeter- bzw. insbesondere Phosphorsäure. Somit ist eine fast vollständige Rückgewinnung der Salpeter- bzw. Phosphorsäure möglich, wenn im stöchiometrischen Verhältnis zum Kalziumgehalt verdünnte Schwefelsäure dosiert wird, wobei die Fällung zu Kalziumsulfat (Gips) völlig überraschenderweise auch bei einem pH-Wert von **unter 1** möglich ist. In der Summe der beiden Schritte ergibt sich folgende chemische Gleichung:

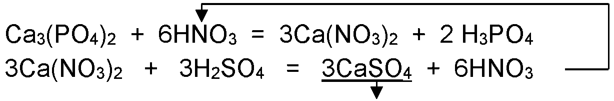

Das Kalziumsulfat-Präzipitat (Gips) wird in bekannter Weise filtriert, entwässert und mit Wasser gewaschen. Bevorzugt wird auch dieses saure Waschwasser als Verdünnungswasser in die erste Prozessstufe zurückgeführt. Der entwässerte Gips kann in weiteren Prozessschritten außerhalb der hier beschriebenen Verfahrenskette weiterverarbeitet werden, z.B. durch Calcinierung zu Anhydrit oder durch chemische Umsetzung nach Patent DE 196 11 454 A1.

Durch mehrfache Kreislaufführung wird auf diese Weise durch immer weiteres Auflösen von Phosphat aus der Asche, die Konzentration an Phosphorsäure immer weiter erhöht und könnte auf eine Konzentration von über 30% H₃PO₄ hochgeschraubt werden, wenn nicht vor allem die ebenfalls mitgelösten Aluminium-Ionen stören würden. Je nach Al₂O₃ -Gehalt der Asche, kann die Al-Konzentration in der Aufschlusssäure auf über 5% steigen, so dass eine Vermarktung nicht mehr möglich ist. Dieses Problem wird in einer **dritten Stufe** gelöst, indem Aluminium-Ionen durch Zugabe von vorzugsweise Kalziumoxid als Aluminium-hydroxophosphat ausgefällt werden.

Wegen der hohen Salzkonzentration in der Aufschlusssäure ist die Aluminiumhydroxophosphatfällung überraschenderweise bereits durch Zugabe geringer Mengen an Hydroxyl-Ionen bei einer nur geringen Erhöhung des an sich stark sauren pH-Wertes von pH ca 1 bis 1,5 auf pH ca. 2,0 bis 2,5 möglich. Vorzugsweise wird dies durch Zugabe von Kalziumoxid (CaO), aber auch durch Zugabe von Kalziumhydroxid, Kalziumcarbonat, Kalziumsilikat (Kalksandstein) Natriumhydroxid oder Natronwasserglas erreicht. Der Niederschlag aus Aluminiumhydroxophosphat wird durch Filtration nach dem Stand der Technik, z.B. mit einem Dekanter, einem Vakuumbandfilter oder einer Filterpresse abgetrennt bzw. gewonnen.

Der Prozess der **dritten Stufe** lässt sich mit folgender Gleichung beschreiben:

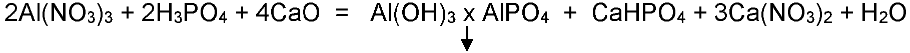

Während Ca-Phosphat und Ca-Nitrat in Lösung bleiben, fallen die Al-Salze bereits bei pH-Werten von ca. 2 als Präzipitat aus.

Nach der Abtrennung (Abreicherung) von Ca- und Al-Ionen in den Prozessstufen zwei und drei ist eine nur noch gering verunreinigte Phosphorsäure bzw. salpetrige Phosphorsäure entstanden. Diese kann durch Eindampfung konzentriert werden und als Phosphorsäure oder salpetrige Phosphorsäure zur Herstellung von Düngemittel zum Einsatz kommen, wobei mit dieser Säure mineralische Rohphosphate aufgeschlossen werden können, was Stand der Technik ist.

Weiterhin kann die gereinigte Phosphorsäure (bzw. im Prinzip auch salpetrige Phosphorsäure) zurückgeführt werden und erfindungsgemäß in der ersten Stufe zur Lösung von Inhaltsstoffen aus der Asche, verwendet werden.

In einer allgemeinen Variante des Verfahrens, bei der salpetrige Phosphorsäure entsteht, wird in der **vierten Stufe** die salpetrige Phosphorsäure mit Kalkstein (Kalziumcarbonat) oder Branntkalk (Kalziumoxid) neutralisiert und das Präzipitat eingedampft, so dass eine Mischung aus Kalziumphosphat und Kalziumnitrat entsteht.

2H₃PO₄ + 2HNO₃ + 2CaO = Ca(NO₃)₂ + Ca(H₂PO₄)₂ + 2H₂O

Dieses Mischprodukt ist ein bevorzugter NP-Dünger.

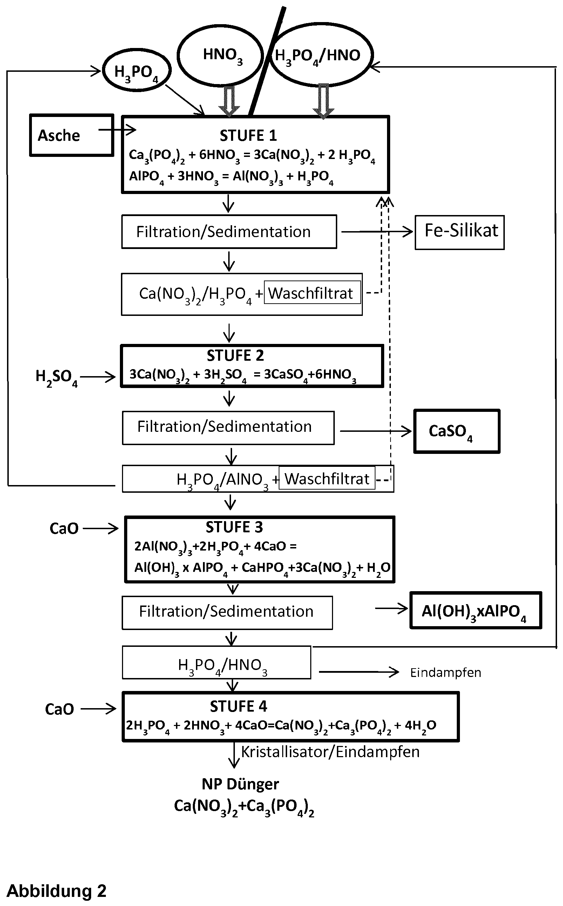

Die Abbildung 2 zeigt die Prozessschritte in einer Übersicht.

Werden alle vier Sufen 1-4 nacheinander durchgeführt, so können in einem einzigen Verfahren aus phosphathaltigen Feststoffen, z.B. Aschen, gleichzeitig die Wertstoffe Kalziumnitrat (CaNO₃), Kalziumphosphat (Ca₃(PO₄)₂), Kalziumsulfat (CaSO₄), und Aluminiumhydroxophosphat ((Al(OH)₃ x AlPO₄) gewonnen werden.

Es ist ersichtlich, dass keinesfalls alle vier Stufen des Verfahrens zwingend durchgeführt werden müssen. Ebenso ist es möglich beispielsweise nur Kalziumphosphat und Kalziumsulfat (Gips) zu gewinnen (Stufen 1, 2, 4). Alternativ können nur Stufen 1, 3 und 4 durchgeführt werden.

Interessanterweise können auch die Stufen 2 und 3 übersprungen werden, so dass Stufe 4 direkt im Anschluss an Stufe 1 durchgeführt werden kann.

Weiterhin kann die zeitliche Abfolge variiert werden, indem z.B. nach Stufe 1 die Stufe 3 und dann Stufen 2 und anschließend 4 durchgeführt werden.

Wie oben ausführlich beschrieben, wird die entstandene Phosphorsäure (H₃PO₄) nach Stufe 2 und nach Stufe 3 wieder zurückgeführt werden zur Verwendung in der Behandlung der Asche in Stufe 1. Diese Rückführung der Al- und Ca-abgereicherten Säure ermöglicht eine enorme Kostenreduzierung, weil zum Auflösen von Asche weniger Frischsäure benötigt wird.

Die vorliegende Erfindung betrifft ein Verfahren zur Gewinnung (Erzeugung) von Präzipitaten ausgewählt aus der Gruppe aus Kalziumnitrat (CaNO₃), Kalziumphosphat (Ca₃(PO₄)₂), Kalziumsulfat (CaSO₄), und Aluminiumhydroxophosphat (Al(OH)₃ x AlPO₄); aus phosphathaltigen Aschen aus Abfallverbrennungsanlagen und zur optionalen Herstellung von Phosphorsäure (H₃PO₄), das Verfahren mindestens umfassend die Gewinnung (Erzeugung) von Kalziumsulfat (CaSO₄), dadurch gekennzeichnet, dass
a) die Feststoffe (Asche) mit Salpetersäure oder Phosphorsäure oder einem Mineralsäuregemisch der beiden Säuren reagiert werden,
b) der säureunlösliche Teil der Feststoffe abgeschieden wird,
c) durch Zugabe von Schwefelsäure zum Filtrat oder Überstand ein pH Wert <1 eingestellt wird, und Kalziumsulfat-Präzipitat gewonnen und abgeschieden wird, und
d) das Filtrat oder der Überstand zumindest teilweise zurückgeführt wird zur Verwendung in Schritt a),
e) optional das Filtrat oder der Überstand konzentriert wird, bevorzugt durch Eindampfung, zur Gewinnung von Phosphorsäure oder salpetriger Phosphorsäure (HNO₃/H3PO₄),
f) optional durch Zugabe von Kalziumoxid oder Kalziumcarbonat zum Filtrat oder zum Überstand Kalziumphosphat-Präzipitat und Kalziumnitrat-Präzipitat gewonnen und abgeschieden wird,
wobei die Reaktionszeit zwischen Säure und Asche 2 bis 60 Minuten beträgt und
die phosphathaltige Asche durch Verbrennung von phosphathaltigen Klärschlämmen in einer Abfall-Verbrennungsanlage erhalten wird.

In einer bevorzugten Ausführungsform der Erfindung werden mindestens 10% des Filtrats/Überstandes zur Verwendung in Schritt a) zurückgeführt, besonders bevorzugt mindestens 20% ,noch mehr bevorzugt 20% bis 80%, und am meisten bevorzugt 40% bis 60%, bezogen auf die gesamte erhaltene Filtratmenge.

Wie ausführlich hierin beschrieben entsteht in Verfahren gemäß der Erfindung auch Phosphorsäure (H₃PO₄), so dass das erfindungsgemäße Verfahren ein Verfahren zur (optionalen) Herstellung von Phosphorsäure (H₃PO₄) ist, und entsprechende Ausführungsformen sind Teil der vorliegenden Erfindung.

Der Begriff **"Präzipitat"** im Sinne der Erfindung bezeichnet das Ausscheiden eines gelösten Stoffes als Feststoff aus einer Lösung, üblicherweise ausgelöst durch Zusätze von geeigneten Substanzen (Fällungsmittel). Insbesondere umfasst der Begriff jeglichen vollständig oder teilweise unlöslichen Niederschlag in Form von Flocken, Tröpfchen oder kristallinem Material, in jeglicher mikrokristallinen, kristallinen oder amorphen Form. Der Begriff "Präzipitat" schliesst ausdrücklich jegliche weitere Verarbeitung, Modifikation, Raffinierung etc., der im erfindungsgemäßen Verfahren erhaltenen Präzipitate zu Pulvern, Pudern, Stäuben, Schüttgut, Granulären Materialien, Grieß etc. ein.

Der Begriff **"Kalziumphosphat"** im Sinne der Erfindung umfasst Ca₃(PO₄)₂), CaHPO4 und Ca(H₂PO₄)₂.

Der Begriff **"Asche"** im Sinne der Erfindung bezieht sich auf jeglichen festen Rückstand aus der Verbrennung organischen Materials, beispielsweise von Klärschlamm, biologisch abbaubaren Abfällen, Bioabfällen und/oder Tierabfällen, Schlachtabfällen, z.B. Tiermehl. Asche besteht vor allem aus Oxiden und (Bi-)Karbonaten diverser Metalle, z. B. Al₂O₃, CaO, Fe₂O₃, MgO, MnO, P₂O₅, P₄O₁₀, K₂O, SiO₂, Na₂CO₃, NaHCO₃, etc.

Der Begriff **"phosphathaltige Asche"** im Sinne der Erfindung bezieht sich auf Aschen, wie hierein definiert, die mindestens ein Phosphat, wie hierin definiert, enthalten.

Der Begriff **"Phosphate"** im Sinne der Erfindung bezieht sich zum einen auf P₂O₅ und P₄O₁₀. Weiterhin betrifft der Begriff "Phosphate" die Salze und Ester der Orthophosphorsäure (H₃PO₄), und schließt ausdrücklich auch die Kondensate (Polymere) der Orthophosphorsäure und ihre Ester ein. Insbesondere betrifft der Begriff "Phosphate" metallische Salze der Phosphorsäure mit der allgemeinen Formel X(Y)ₘ(PO₄)n, wobei X und wahlweise Y, ein Metall ist, ausgewählt aus der Gruppe bestehend aus Aluminium, Beryllium, Bismut, Blei, Kadmium, Chrom, Eisen, Gallium, Indium, Kalium, Kobalt, Kupfer, Magnesium, Mangan, Molybdän, Natrium, Nickel, Osmium, Palladium, Rhodium, Ruthenium, Strontium, Titan, Vanadium, Wolfram, Zink, Zinn.

Der Begriff **"Abfall-Verbrennungsanlagen"** im Sinne der Erfindung bezieht sich auf sämtliche Anlagen, Einrichtungen und dergleichen, die zur Verbrennung der atmosphärisch brennbaren Anteile von jeglicher Art von Abfall geeignet sind.

Der Begriff **"Klärschlamm"** im Sinne der Erfindung bezieht sich auf jede Suspension fein verteilter Teilchen einer festen Substanz in einer Flüssigkeit.

In einer bevorzugten Ausführungsform ist die Flüssigkeit, in der die Teilchen suspendiert sind, ein Abwasser wie hierin definiert.

Der Begriff **"Abwasser"** im Sinne der Erfindung bezieht sich auf sämtliche Flüsssigkeiten wässriger Natur, und/oder organischer Natur, oder Mischungen daraus, die nicht Trinkwasserqualität im Sinne der Trinkwasserverordnung (TrinkwV) und/oder von nationalen und/oder internationalen Trinkwassernormen (z.B. der DIN 2000 in Deutschland) haben. Der Begriff Abwasser umfasst weiterhin alle Abwässer gemäß § 54 Abs. 1 Wasserhaushaltsgesetz (WHG).

In einer bevorzugten Ausführungsform handelt es sich bei dem Abwasser im Sinne der Erfindung um durch Gebrauch verunreinigtes bzw. in seinen Eigenschaften oder seiner Zusammensetzung verändertes Wasser. Weiterhin umfasst der Begriff "Abwasser" im Sinne der Erfindung das durch häuslichen, gewerblichen, landwirtschaftlichen oder sonstigen Gebrauch in seinen Eigenschaften veränderte Wasser und das bei Trockenwetter damit zusammen abfließende Wasser (Schmutzwasser) sowie das von Niederschlägen aus dem Bereich von bebauten oder befestigten Flächen gesammelt abfließende Wasser (Niederschlagswasser). Die aus Anlagen zum Behandeln, Lagern und Ablagern von Abfällen austretenden und gesammelten Flüssigkeiten gelten ebenfalls als Schmutzwasser. Schmutzwasser sind häusliche Abwasser aus Toiletten (Fäkal- oder Schwarzwasser), Sanitäreinrichtungen, Küchen und Waschmaschinen (Wasch- oder Grauwasser) sowie Abwasser aus Betrieben, die in die öffentliche Kanalisation ableiten (gewerbliches oder industrielles Abwasser). Auch aufgeheiztes Wasser aus Kühlanlagen zählt als Abwasser. Abwässer, die bei den verschiedensten Reinigungs- und Behandlungstechniken von Wasseraufbereitungsanlagen anfallen, gehören zu den Abwässern im Sinne der Erfindung.

In einer besonders bevorzugten Ausführungsform liegt der Klärschlamm als Primärschlamm, Rohschlamm, Überschussschlamm, als behandelter und/oder stablisierter Klärschlamm (aerob/anaerob) vor.

Der Begriff **"Bioabfall"** im Sinne der Erfindung bezieht sich auf sämtliche organischen Abfälle tierischer oder pflanzlicher Herkunft, die in einem Haushalt oder Betrieb anfallen und durch Mikroorganismen, bodenlebende Lebewesen oder Enzyme abgebaut werden können. Dazu zählen zum Beispiel Essenreste und Rasenschnitt. Bioabfälle werden in der Regel über die sogenannte Biotonne separat erfasst und gesondert durch Kompostierung und Gärung behandelt. Der dabei entstehende Kompost und das Gärgut werden der Umwelt häufig wieder zugeführt, unter anderem im Gartenbau und in der Landwirtschaft. Der Begriff Bioabfall umfasst dabei sowohl Abfälle gemäß der Begriffsbestimmung der EU-Abfallrahmenrichtlinie Garten- und Parkabfälle sowie Nahrungs- und Küchenabfälle (aus Haushalten, Gaststätten, Cateringgewerbe, Einzelhandel und Verarbeitungen im Nahrungsmittelgewerbe).

Der Begriff **"biologisch abbaubare Abfälle"** im Sinne der Erfindung umfasst neben Bioabfällen wie hierin definiert, weiterhin auch sämtliche organischen Abfälle tierischer oder pflanzlicher Herkunft aus Land- und Forstwirtschaft, die durch Mikroorganismen, bodenlebende Lebewesen oder Enzyme abgebaut werden können. Insbesondere umfasst dieser Begriff sämtliche organischen Abfälle tierischer oder pflanzlicher Herkunft aus Land- und Forstwirtschaft die weiterhin mindestens einen der folgenden biologisch abbaubare Stoffe ausgewählt aus der Liste bestehend aus Holz, Papier und Pappe enthalten.

Der Begriff **"Tierabfälle"** im Sinne der Erfindung umfasst Tierkörper verendeter, toter oder totgeborener Groß- oder Haustiere - oder Teile davon - sowie Schlachtabfälle, verdorbene Lebensmittel tierischer Herkunft, und Tiernebenprodukte wie Milch, Eier, Konfiskate aber auch Darminhalt und Gülle, sowie sämtliche weiteren Produkte, Erzeugnisse.

Insbesondere umfasst der Begriff "Tierabfälle" im Sinne der Erfindung Fleisch und tierische Nebenprodukte von Haustieren, Wildtieren oder Nutztieren, die aus Krankheitsgründen getötet wurden oder verendeten, insbesondere TSE verseuchte Tierleichen sowie mit Chemikalien oder verbotenen Stoffen kontaminierte Tiere und Versuchstiere. Weiterhin umfasst sind Fleisch und Nebenprodukte mit dem Risiko anderer, nicht übertragbarer Krankheiten.

Der Begriff "Tierabfälle" im Sinne der Erfindung umfasst ausserdem getötete, also nicht geschlachtete Tiere, tierische Nebenprodukte (beispielsweise Milch), und jegliche Tierprodukte mit Rückständen von Medikamenten. Ebenfalls ausdrücklich umfasst sind sämtliche Abfälle und Nebenprodukte aus Schlachtbetrieben, Küchen- und Speiseabfälle, für den menschlichen Verzehr nicht mehr geeignete Lebensmittel tierischen Ursprungs, Rohmilch, frischer Fisch oder frische Fischnebenprodukte. Insbesondere sind umfasst:
- Küchen- und Speiseabfälle jeglicher Art,
- Fische oder andere Meerestiere, sowie Fischabfälle jeglicher Art,
- Ehemalige tierische Lebensmittel, die aus anderen, nicht gesundheitsschädlichen Folgen, z.B. Verpackungsmängeln, für den menschlichen Verzehr nicht mehr bestimmt sind,
- Schlachtkörperteile,
- Rohmilch,
- Schalen, Brütereinebenprodukte und Knickeiernebenprodukte,
- Haare, Pelze, Hörner usw.,
- Tierische Abfälle aus der Lebensmittelindustrie,
- Häute, Hufe und Hörner, Schweineborsten und Federn von Tieren,
- überlagertes Fleisch,
- minderwertiges Fleisch,
- Fleisch von Tieren unter erheblicher Stressbelastung,
- Blut von Tieren (nicht von Wiederkäuern), die nach einer Untersuchung in einem Schlachthof geschlachtet wurden,
- Tierische Schlachtkörperteile und Nebenprodukte, die bei der Herstellung von für den menschlichen Verzehr bestimmten Erzeugnissen angefallen sind, entfettete Knochen und Grieben, sowie Tiermehl.

Gemäß der Erfindung erfolgt die Verbrennung von Klärschlamm in einer Abfall-Verbrennungsanlage vorzugsweise bei 600° bis 1.200 °C, insbesondere vorzugsweise bei 800° bis 900°C.

In bevorzugten Ausführungsformen der Erfindung, erfolgt die Reaktion der Feststoffe (Asche) mit Salpetersäure.

In bevorzugten Ausführungsformen der Erfindung, erfolgt die Reaktion der Feststoffe (Asche) mit Phosphorsäure.

In bevorzugten Ausführungsformen der Erfindung, erfolgt die Reaktion der Feststoffe (Asche) mit einem Mineralsäuregemisch aus Phosphorsäure und Salpetersäure und enthält keine Halogenwasserstoffsäuren. Insbesondere enthält das Mineralsäuregemisch nicht Salzsäure.

In bevorzugten Ausführungsformen der Erfindung, liegt das Mineralsäuregemisch in einer Konzentration von 5 Gew.% bis 50 Gew.%, vorzugsweise 10 Gew.% bis 30 Gew.% in wässriger Verdünnung vor.

In bevorzugten Ausführungsformen der Erfindung, wird die phosphathaltige Asche in einem Reaktor mit dem Mineralsäuregemisch versetzt, wobei der Anteil an Asche 5 Gew.% bis 50 Gew.%, vorzugsweise 20 Gew.% bis 30 Gew.% bezogen auf die verdünnte Mineralsäure beträgt.

In bevorzugten Ausführungsformen der Erfindung, enthält das Mineralsäuregemisch mindestens Phosphor- und Salpetersäure.

In bevorzugten Ausführungsformen der Erfindung, enthält das Mineralsäuregemisch zusätzlich zu Phosphor- und Salpetersäure auch Schwefelsäure.

In bevorzugten Ausführungsformen der Erfindung, beträgt die Reaktionstemperatur 20°C bis 90°C, vorzugsweise 60 bis 80°C.

In bevorzugten Ausführungsformen der Erfindung, wird der säureunlösliche Teil der Feststoffe durch mechanische Filtrations- und/oder Entwässerungsverfahren abgeschieden.

In bevorzugten Ausführungsformen der Erfindung, erfolgt die Abscheidung des säureunlöslichen Teils der Feststoffe mit Entwässerungsaggregaten (z.B. Vakuumbandfilter, Kammerfilterpresse, Membran-Filterpresse, Siebbandpresse, Zentrifuge).

In bevorzugten Ausführungsformen der Erfindung, erfolgt die Abscheidung des säureunlöslichen Teils der Feststoffe mit einem Vakuumbandfilter.

In bevorzugten Ausführungsformen der Erfindung, wird nach Abscheidung des säureunlöslichen Teils der Feststoffe der Rückstand in den Filteraggregaten mit Wasser gewaschen und das Waschwasser in die erste Prozessstufe zurückgeführt.

In bevorzugten Ausführungsformen der Erfindung, erfolgt die Zugabe von Schwefelsäure in einer Verdünnung von 10 bis 98 Gew.%, vorzugsweise 40 bis 80 Gew. %

In bevorzugten Ausführungsformen der Erfindung, wird die Schwefelsäure in einem Mol-Verhältnis zugegeben wird, das der gelösten Kalzium-Konzentration von 0,5 Ca zu 1,5 SO₄ (Sulfat), vorzugsweise 1,0 Ca zu 1,0 SO₄ (Sulfat) entspricht.

In bevorzugten Ausführungsformen der Erfindung, erfolgt die Zugabe von Schwefelsäure in einem Rührreaktor.

In bevorzugten Ausführungsformen der Erfindung, beträgt die Verweilzeit im Rührreaktor nach Zugabe der Schwefelsäure 5 bis 60 Minuten, vorzugsweise 10 bis 30 Minuten.

In bevorzugten Ausführungsformen der Erfindung, beträgt die Reaktionstemperatur (Ausfällung von Kalziumsulfat nach Zugabe von Schwefelsäure) im Rühreaktor 20° bis 90°C, vorzugsweise 60° bis 90°C.

In bevorzugten Ausführungsformen der Erfindung, wird das Kalziumsulfat-Präzipitat durch mechanische Filtrations- und/oder Entwässerungsverfahren abgeschieden.

In bevorzugten Ausführungsformen der Erfindung, erfolgt die Abscheidung das Kalziumsulfat-Präzipitats mit Entwässerungsaggregaten (z.B. Vakuumbandfilter, Kammerfilterpresse, Membran-Filterpresse, Siebbandpresse, Zentrifuge).

In bevorzugten Ausführungsformen der Erfindung, erfolgt die Abscheidung das Kalziumsulfat-Präzipitats mit einem Vakuumbandfilter.

In bevorzugten Ausführungsformen der Erfindung, wird nach Abscheidung des Kalziumsulfat-Präzipitats der Rückstand in den Filteraggregaten mit Wasser gewaschen und das Waschwasser in die erste Prozessstufe zurückgeführt.

In bevorzugten Ausführungsformen der Erfindung, wird nach Abscheidung des Kalziumsulfat-Präzipitates das gewonnene Filtrat (verdünntes Mineralsäuregemisch) zumindest teilweise wieder zum Aufschluss der Feststoffe verwendet.

In bevorzugten Ausführungsformen der Erfindung, beträgt der Anteil der Rückführung des Filtrates mindestens 10%, bevorzugt mindestens 20%, noch mehr bevorzugt 20% bis 80%, und am meisten bevorzugt 40% bis 60%, bezogen auf die gesamte erhaltene Filtratmenge.

In bevorzugten Ausführungsformen der Erfindung, wird das Filtrat oder der Überstand enthaltend Phosphorsäure (H₃PO₄), wahlweise erhalten nach Abscheidung von Fe-Silikat und/oder Kalziumsulfat, und/oder Aluminiumhydroxophosphat, durch Eindampfung auf einen Säuregehalt von 30 Gew.% bis 70 Gew.%, vorzugsweise 40 Gew.% bis 60 Gew.% konzentriert.

In bevorzugten Ausführungsformen der Erfindung, wird im Filtrat oder Überstand, enthaltend Phosphorsäure (H₃PO₄), wahlweise erhalten nach Abscheidung von Fe-Silikat und/oder Kalziumsulfat, und/oder Aluminiumhydroxophosphat, durch die Zugabe von Kalziumoxid oder Kalziumcarbonat unter Bildung von Kalzium-Präzipitaten, der pH-Wert auf 4 bis 12, vorzugsweise 6 bis 9 eingestellt.

In bevorzugten Ausführungsformen der Erfindung, erfolgt die Zugabe von Kalziumoxid oder Kalziumcarbonat zum Filtrat oder Überstand, enthaltend Phosphorsäure (H₃PO₄), wahlweise erhalten nach Abscheidung von Fe-Silikat und/oder Kalziumsulfat, und/oder Aluminiumhydroxophosphat, in einem Rührreaktor unter Bildung von Kalzium-Präzipitaten.

In bevorzugten Ausführungsformen der Erfindung, wird nach der Bildung von Kalzium-Präzipitaten die Feststoffsuspension durch Wärmezuführung soweit eingedampft oder sprühgetrocknet wird, dass ein Feststoff mit einer Restfeuchte von 0 Gew.% bis 25% Gew.%, vorzugsweise von 2 Gew.% bis 10 Gew.% entsteht.

In bevorzugten Ausführungsformen der Erfindung, liegt das Präzipitat bzw. die Präzipitate als vollständig oder teilweise unlöslicher Niederschlag in Form von Flocken, Tröpfchen oder kristallinem Material, in jeglicher mikrokristallinen, kristallinen oder amorphen Form, vor.

In bevorzugten Ausführungsformen der Erfindung, wird das Präzipitat bzw. die Präzipitate weiterverarbeitet, modifiziert, raffiniert etc. zu Pulvern, Pudern, Stäuben, Schüttgut, granulären Materialien, Grieß etc.

### Beispiele

Der gesamte Prozess wird beispielhaft durch den folgenden Versuchsablauf beschrieben, der das erfindungsgemäße Verfahren erläutert, ohne es exakt wiederzugeben:
Ausgangsmaterial ist eine Asche aus einer Klärschlammverbrennungsanlage. Die wesentlichen Bestandteile wurden wie folgt analysiert:

| | |
|---|---|
| Gew. % P2O5 | 25,0 |
| Gew. % CaO | 17,5 |
| Gew. % Fe2O3 | 26,9 |
| Gew. % Al2O3 | 6,7 |
| Gew. % SiO2 | 19,5 |

100g Asche werden in einem Becherglas mit 300g verdünnter Säure behandelt.

Die verdünnte Säure besteht aus: 70 Gew. % Wasser; 15 Gew. % HNO₃ und 15 Gew. % H₃PO₄. Die Suspension wird 30 Minuten bei 40°C gerührt und anschließend über eine Vakuum-Nutsche (mit Filter) filtriert. Der Filterkuchen wird anschließend gewogen und danach bei 100°C getrocknet.
Filterkuchen nass = 122g
Filterkuchen getrocknet = 72g

Daraus errechnet sich, dass sich aus 100g Asche 72g in Säure nicht gelöst haben, 28g (= 28%) sind säurelöslich. Insgesamt wurde 275g Filtrat zurückgewogen und anschließend analysiert. Den Analysenresultaten in der folgenden Tabelle wurden theoretische Werte gegenübergestellt, die sich ergeben, wenn sich die wesentlichen Asche-Inhalte zu 100% (im Filtrat und Naßanteil des Filterkuchens) gelöst hätten:

| | (100%) | (ist) | säurelöslich |
|---|---|---|---|
| Gew. % P2O5 | 17,78* | **13,68** | 88,7% |
| Gew. % CaO | 5,37 | **4,80** | 89,4% |
| Gew. % Fe2O3 | 8,25 | **0,47** | 5,7% |
| Gew. % Al2O3 | 2,06 | **1,56** | 75,7% |
| Gew. % SiO2 | 5,98 | **0,02** | 0,3% |
| *7,69% P₂O₅ resultieren aus der Asche, 10,09% P₂O₅ aus der zugegebenen Phosphorsäure. | | | |

Die Resultate verdeutlichen, dass hohe Rücklöseraten von Phosphat, Kalzium und Aluminium erreicht werden, während Eisen nur gering gelöst wird und Silizium als SiO₂ erwartungsgemäß fast unlöslich ist. Die Konzentration an H₃PO₄ hat sich von zuvor 15 Gew. % auf nun 13,68 x 1,37 = **18,7 Gew. %** erhöht (1,37 = Faktor zur Umrechnung von P₂O₅ auf H₃PO₄). Durch Eindampfen um den Faktor 2 erhält man eine Säure mit 37,4% H₃PO₄ und 30% HNO₃. Diese Säure kann zur Herstellung von Düngemitteln verwendet werden oder ist mit CaO zu neutralisiert und dann einzudampfen, wobei ein Doppelsalz von Ca(NO₃)₂ * Ca(H₂PO₄)₂ entsteht.

Dieses Verfahren hat den Nachteil, dass einerseits erhebliche Mengen an Salpeter- und Phosphorsäure benötigt werden, andererseits Verunreinigungen von Eisen- und Aluminium-Salzen die Produktqualität verschlechtert. Der Prozess wäre wirtschaftlich grenzwertig und die Wertschöpfung der Endprodukte stark einschränkt.

Diese Probleme, die vor allem mit höheren Al-Konzentrationen in den Klärschlammaschen (die bis über 20% Al₂O₃ betragen können) massiv sind, werden durch einen mehrstufigen Prozess in Stufe 2 und Stufe 3 wie folgt gelöst: Der Filterkuchen (122g Naßgewicht) aus der beschriebenen 1. Stufe (dem Asche-Lösungsprozess) wird mit 100g Heißwasser (70-90°C) gewaschen. Das gewonnene Waschfiltrat wird gemeinsam mit 200g Filtrat der 1. Stufe (Dünnsäure) mit 25g Schwefelsäure (48 Gew. %ig) in einem Becherglas vermischt (Gesamtgewicht = 100 + 200 + 25 = 325g). Nach wenigen Minuten fällt entsprechend der oben beschriebenen Reaktion weißes Kalziumsulfat aus. Nach 30 Minuten wurde das Präzipitat über eine Vakuum-Nutsche (mit Filter) filtriert. Es wurden 280g Filtrat und 43g Gips-Naß-Filterkuchen gewonnen. Das Filtrat wurde analysiert.

Den Analysenresultaten in der folgenden Tabelle werden Werte gegenübergestellt, die sich aus einem Parallelversuch ergeben, bei dem Filtrat der 1. Stufe plus Waschwasser in den oben genannten Verhältnissen analysiert worden sind:

| | Filtrat+WW | nach Ca-Fällung |
|---|---|---|
| pH-Wert | 1,9 | 0,9 |
| Gew. % P2O5 | 9,58 | 9,43 |
| Gew. % CaO | 3,70 | 1,45 |
| Gew. % Fe2O3 | 0,32 | 0,33 |
| Gew. % Al2O3 | 0,98 | 1,01 |

Die Daten verdeutlichen, dass der Ca-Gehalt reduziert ist, gleichzeitig auch der pH-Wert, weil sich zusätzliche H-Ionen bilden konnten. Das saure Filtrat der 2. Stufe kann nun beim Auflösen der Asche genutzt werden, wobei nun auf die Dosierung von H₃PO₄ vollständig verzichtet werden kann, weil sich ständig neue Phosphorsäure aus der phosphathaltigen Asche bildet. Diese Stufe ist im mehrstufigen Verfahren besonders hervorzuheben, weil durch Verwendung der Schwefelsäure insgesamt die Säurekosten reduziert werden (Schwefelsäure ist gemäß ihrer Effizienz die preisgünstigste Säure), und weil zusätzlich Gips gewonnen wird.

Mit dem rezyklierten Filtrat (kalziumarme Dünnsäure) ist die Rezeptur der 1. Stufe nun wie folgt: 100g Asche werden in einem Becherglas mit 300g verdünnter Säure behandelt. Die verdünnte Säure besteht aus: 270g Rezyklat und 20g HNO₃. Die Suspension wird 30 Minuten bei 40°C gerührt und anschließend über eine Vakuum-Nutsche (mit Filter) filtriert. Der Filterkuchen wird anschließend gewogen und danach bei 100°C getrocknet.
Filterkuchen nass = 130g
Filterkuchen getrocknet = 75g

Daraus errechnet sich, dass sich aus 100g Asche 75g in Säure nicht gelöst haben, d.h. 25g (= 25%) sind säurelöslich. Insgesamt wurde 258g Filtrat (Dünnsäure) zurückgewogen und anschließend analysiert. Die Analysenresultate entsprechen im Wesentlichen den Resultaten der 1. Startstufe, lediglich der CaO-Gehalt war mit 5,8% CaO etwas höher (weil noch zusätzliches Kalzium über das Rezyklat eingetragen wurde), während der Al₂O₃-Gehalt von 1,5 auf 2,6% weiter angestiegen ist. In einer 3. Stufe wird nun durch Zugabe geringer Mengen an Kalziumoxid die Aluminiumkonzentration in der Dünnsäure reduziert. Dazu wird 150g Dünnsäure bei Raumtemperatur mit 1g CaO vermischt. Es bildete sich ein Präzipitat, das nach 15 Minuten über eine Vakuum-Nutsche (mit Filter) filtriert wurde. Es wurden 123g Filtrat und 25g Naß-Filterkuchen gewonnen. Das Filtrat wurde analysiert.

Den Analysenresultaten in der folgenden Tabelle werden Werte gegenübergestellt, die sich aus einem Parallelversuch ergeben, bei dem die Dünnsäure vor der Zugabe von CaO analysiert worden ist.

| | Dünnsäure | nach Al-Fällung |
|---|---|---|
| pH-Wert | 0,9 | 2,2 |
| Gew. % P2O5 | 9,35 | 8,95 |
| Gew. % CaO | 5,84 | 6,42 |
| Gew. % Fe2O3 | 0,54 | 0,48 |
| Gew. % Al2O3 | 2,61 | 0,84 |

Durch geringfügige Erhöhung des pH-Wertes bildete sich ein Al-PO4-Präzipitat, was an den erniedrigten Werten für P2O5, und Al2O3 zu sehen ist. Ganz bewusst werden durch die Fällung die Werte nur geringfügig reduziert, denn es soll lediglich eine zu starke Anreicherung an Al-Ionen verhindert werden. Das mit Wasser gewaschene und getrocknete Präzipitat wurde wie folgt analysiert:

| | |
|---|---|
| Gew. % P2O5 | 31,3 |
| Gew. % CaO | 1,1 |
| Gew. % Fe2O3 | 3,5 |
| Gew. % Al2O3 | 56,1 |

Das Präzipitat ist in einem weiteren Versuch gemäß Patent DE 102012015065 B3 2013.07.18 weiterbehandelt worden und zu Natriumaluminat-Lösung und einem Kalziumphosphat-Präzipitat umgewandelt worden.

Die hier beschriebenen Prozessschritte sind je nach Konzentration von Ca- und Al-Ionen in der Aufschlusssäure (bzw. den entsprechenden Oxidkonzentrationen in der Asche) variabel anzuwenden. Das Wesen der Erfindung besteht darin, dass durch Kombination der Prozessschritte eine wirtschaftliche Prozessführung ermöglich wird und vor allem aluminiumarme Endprodukte erhalten werden.

Die gereinigte HNO₃-H₃PO₄-Säure wird vorzugsweise mit CaO auf einen pH-Wert von 6 neutralisiert und durch Wasserverdampfung konzentriert, z.B. durch Sprühtrocknung. Es entsteht ein Doppelsalz aus Kalziumnitrat und Kalziumphosphat. gemäß der Erfindung konnte ein Salz mit folgender Zusammensetzung erzeugt werden: 19.5 Gew.% P2O5; 28,5 Gew.% CaO; 24,3 Gew.% NO3; 0,8 Gew.% Al2O3, 0,6 Gew.% Fe2O3.

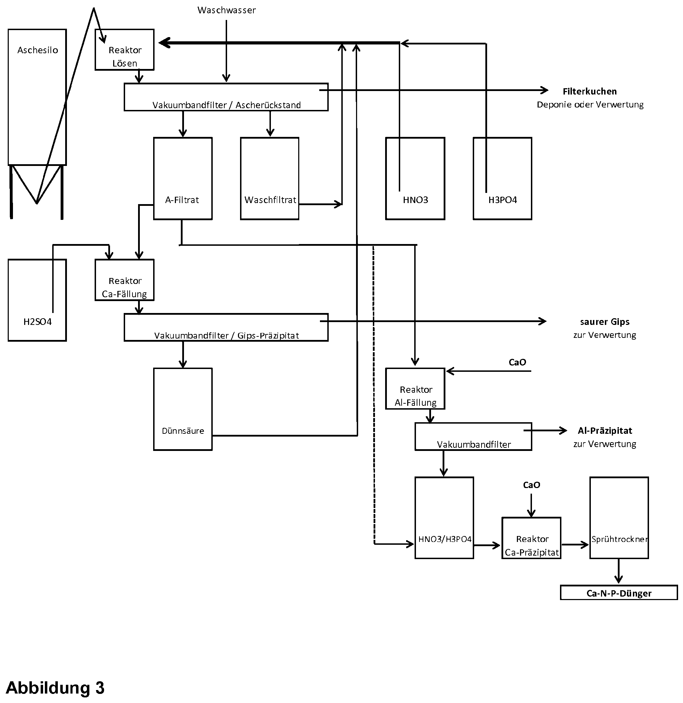

Abbildung 3 zeigt die verschiedenen Prozessabläufe im Schema.

## Patentansprüche

1. Verfahren zur Gewinnung von Präzipitaten ausgewählt aus der Gruppe aus Kalziumnitrat, Kalziumphosphat, Kalziumsulfat und Aluminiumhydroxophosphat; aus phosphathaltigen Aschen aus Abfallverbrennungsanlagen und zur optionalen Herstellung von Phosphorsäure, das Verfahren mindestens umfassend die Gewinnung von Kalziumsulfat, **dadurch gekennzeichnet, dass**
a) die Feststoffe/Aschen mit Salpetersäure oder Phosphorsäure oder einem Mineralsäuregemisch der beiden Säuren reagiert werden,
b) der säureunlösliche Teil der Feststoffe abgeschieden wird,
c) durch Zugabe von Schwefelsäure zum Filtrat oder Überstand ein pH Wert <1 eingestellt wird, und Kalziumsulfat-Präzipitat gewonnen und abgeschieden wird, und
d) das Filtrat oder der Überstand zumindest teilweise zurückgeführt wird zur Verwendung in Schritt a),
e) optional das Filtrat oder der Überstand konzentriert wird, bevorzugt durch Eindampfung, zur Gewinnung von Phosphorsäure oder salpetriger Phosphorsäure,
f) optional durch Zugabe von Kalziumoxid oder Kalziumcarbonat zum Filtrat oder zum Überstand Kalziumphosphat-Präzipitat und Kalziumnitrat-Präzipitat gewonnen und abgeschieden wird,
wobei die Reaktionszeit zwischen Säure und Asche 2 bis 60 Minuten beträgt und
die phosphathaltige Asche durch Verbrennung von phosphathaltigen Klärschlämmen in einer Abfall-Verbrennungsanlage erhalten wird.

2. Verfahren nach Anspruch 1, **dadurch gekennzeichnet, dass**
die Schritte a), b), c), d) und e) durchgeführt werden.

3. Verfahren nach Anspruch 1, **dadurch gekennzeichnet, dass**
die Schritte a), b), c), d) und f) durchgeführt werden.

4. Verfahren nach Ansprüchen 1, 2 und 3, **dadurch gekennzeichnet, dass**, im Schritt d) mindestens 10% des Filtrats/Überstandes zur Verwendung in Schritt a) zurückgeführt wird, bevorzugt mindestens 20%, mehr bevorzugt 20% bis 80%, und noch mehr bevorzugt 40% bis 60%, bezogen auf die gesamte erhaltene Filtratmenge.

5. Verfahren nach Ansprüchen 1 bis 4, **dadurch gekennzeichnet, dass** es sich um ein Verfahren zur Herstellung von Phosphorsäure handelt.

6. Verfahren nach Ansprüchen 1 bis 65, **dadurch gekennzeichnet, dass** die Reaktion der phosphathaltigen Aschen in Schritt (a) mit Phosphorsäure erfolgt.

## Claims

1. A method for the recovery of precipitates selected from the group of calcium nitrate, calcium phosphate, calcium sulphate and aluminium hydroxophosphate of phosphate-containing ashes from waste incineration plants and for the optional manufacture of phosphoric acid, the method at least comprising the recovery of calcium sulphate, **characterized in that**
a) the solids/ashes are reacted with nitric acid or phosphoric acid or a mineral acid mixture of the two acids,
b) the acid-insoluble part of the solids is separated,
c) a pH value of <1 is set by adding sulfuric acid to the filtrate or supernatant, and calcium sulphate-precipitate is recovered and separated, and
d) the filtrate or the supernatant is at least partially returned for use in step a),
e) optionally, the filtrate or the supernatant is concentrated, preferably by evaporation, to recover phosphoric acid or nitrous phosphoric acid,
f) optionally, calcium phosphate-precipitate and calcium nitrate-precipitate are recovered and separated by adding calcium oxide or calcium carbonate to the filtrate or to the supernatant,
wherein the reaction time between acid and ash is 2 to 60 minutes and
the phosphate-containing ash is obtained by burning phosphate-containing sewage sludges in a waste incineration plant.

2. The method according to claim 1, **characterized in that**
the steps a), b), c), d) and e) are carried out.

3. The method according to claim 1, **characterized in that**
the steps a), b), c), d) and f) are carried out.

4. The method according to claims 1, 2 and 3, **characterized in that,** in step d), at least 10% of the filtrate/supernatant is returned for use in step a), preferably at least 20%, more preferably 20% to 80%, and even more preferably 40% to 60%, based on the total filtrate amount obtained.

5. The method according to claims 1 to 4, **characterized in that** it is a method for the manufacture of phosphoric acid.

6. The method according to claims 1 to 5, **characterized in that** the reaction of the phosphate-containing ashes in step (a) takes place with phosphoric acid.

## Revendications

1. Procédé de récupération de précipités choisis dans le groupe constitué par le nitrate de calcium, le phosphate de calcium, le sulfate de calcium et l'aluminium d'hydroxo-phosphate de cendres contenant du phosphate provenant de plantes d'incinération de déchets et pour la fabrication facultative d'acide phosphorique (H₃PO₄), le procédé comprenant au moins la récupération de sulfate de calcium, **caractérisé en ce que**
a) les solides/cendres sont mis à réagir avec de l'acide nitrique ou de l'acide phosphorique ou un mélange d'acides minéraux des deux acides,
b) la partie insoluble dans l'acide des solides est séparée,
c) une valeur de pH de <1 est réglée par ajout d'acide sulfurique au filtrat ou surnageant, et le précipité de sulfate de calcium est récupéré et séparé, et
d) le filtrat ou le surnageant est au moins partiellement renvoyé pour être utilisé dans l'étape a),
e) facultativement, le filtrat ou le surnageant est concentré, de préférence par évaporation, pour récupérer de l'acide phosphorique ou de l'acide nitreux,
f) facultativement, le précipité de phosphate de calcium et le précipité de nitrate de calcium sont récupérés et séparés par ajout d'oxyde de calcium ou de carbonate de calcium au filtrat ou au surnageant,
dans lequel le temps de réaction entre l'acide et les cendres est de 2 à 60 minutes et
la cendre contenant du phosphate est obtenue par combustion de boues d'épuration contenant du phosphate dans une installation d'incinération de déchets.

2. Procédé selon la revendication 1, **caractérisé en ce que**
les étapes a), b), c), d) et e) sont réalisées.

3. Procédé selon la revendication 1, **caractérisé en ce que**
les étapes a), b), c), d) et f) sont réalisées.

4. Procédé selon les revendications 1, 2 et 3, **caractérisé en ce qu'**à l'étape d), au moins 10% du filtrat/surnageant est renvoyé pour être utilisé à l'étape a), de préférence au moins 20%, plus préférentiellement de 20% à 80%, et encore plus préférentiellement de 40% à 60%, sur la base de la quantité totale de filtrat obtenue.

5. Procédé selon les revendications 1 à 4, **caractérisé en ce qu'**il s'agit d'un procédé de fabrication d'acide phosphorique.

6. Procédé selon les revendications 1 à 5, **caractérisé en ce que** la réaction des cendres contenant du phosphate à l'étape (a) a lieu avec de l'acide phosphorique.
